# EUROPÄISCHE PATENTSCHRIFT

(11) **EP 0 697 379 B1**
(45) Veröffentlichungstag und Bekanntmachung des Hinweises auf die Patenterteilung: **30.06.1999**
(21) Anmeldenummer: 95111137.6
(22) Anmeldetag: 15.07.1995
(51) Int. Cl.: C04B 18/02, C04B 24/00

(54) **Verfahren zur Herstellung von granulierten Zusatzstoffen für Baustoffe**
Process for the preparation of agglomerated additives for building materials
Procédé pour la fabrication d'additifs agglomères pour matériaux de construction

(30) Priorität: 17.08.1994 DE 4429147
(43) Veröffentlichungstag der Anmeldung: 21.02.1996
(73) Patentinhaber: Glatt Ingenieurtechnik GmbH, D-99427 Weimar (DE)
(72) Erfinder: Rümpler, Karlheinz, Dr. Dipl.-Ing., D-99425 Weimar (DE); Walter, Ulrich, Dr. Dipl.-Ing., D-99423 Weimar (DE); Böber, Reinhard, Dipl.-Ing., D-99425 Weimar (DE); Wand, Bernhard, Dipl.-Ing., D-99510 Apolda (DE); Prahl, Wolfgang, Dipl.-Ing., D-99425 Weimar (DE); Nowak, Reinhard, Dipl.-Ing., D-79589 Binzen (DE)
(74) Vertreter: Schmitt, Hans, Dipl.-Ing.

(56) Entgegenhaltungen:
- EP-A- 0 365 046
- EP-A- 0 518 152
- DE-A- 4 223 598
- GB-A- 2 040 954
- US-A- 3 579 366

## Beschreibung

Die Erfindung betrifft ein Verfahren zur Herstellung von granulierten Zusatzstoffen für zement- oder kalkgebundene Baustoffe wie z.B Betonverflüssiger, Farbverstärker, Luftporenbildner, Farbstoffe auf Basis anorganischer Pigmente, festigkeitserhöhende Komponenten oder dergleichen, welche zur Einmischung in trockene, flüssige oder pastöse Baustoffe vorgesehen sind.

Insbesondere in der Betonwarenindustrie werden die verschiedensten Zusatzstoffe verwendet, um die Eigenschaften und gegebenenfalls auch die Farbe des Betons verändern zu können. So kann durch das Einbringen bestimmter Zusatzstoffe in Flüssigfarben die Verdichtungswilligkeit des Betons erhöht werden, um eine Erhöhung der Druckfestigkeit und die gleichmäßigere Pressung der Betonprodukte zu erzielen. Mit einer Reduzierung des Zementgehaltes ist dagegen ein ökonomischer Vorteil verbunden. Eine bessere Dispergierbarkeit des Zementleims bewirkt demgegenüber eine geschlossenere Oberfläche. Und schließlich begünstigt eine erhöhte Plastizität des Betons eine schnellere Befüllung der Formen und eine lange Lebensdauer der Steinformen in Folge eines geringeren Verschleißes an den Formenwänden. Somit lassen sich durch die unterschiedlichsten Zusatzstoffe und Stoffkombinationen bestimmte anwendungsorientierte Eigenschaften des Betons und der aus ihm hergestellten Produkte erzielen.

Bei der Kombination von Farben, Farbhilfsstoffen und betontechnologisch verwertbaren Zuschlagsstoffen ist jedoch auf die Verträglichkeit dieser Stoffe Rücksicht zu nehmen. Häufig bilden diese Zusatzstoffe chemisch instabile Lösungen und auch durch zusätzlichbeigemischteDispergierhilfenundchemischeStabilisatoren wird das Problem einer dauerhaft lagerstabilen Flüssigkeit eher erhöht.

Zum Einfärben von Betonwaren ist es in der Bauindustrie bereits bekannt, anorganische und organische Pigmente zu verwenden, wobei sich in der Praxis insbesondere Pigmente auf der Basis von anorganischen Farbpigmenten bewährt haben. Diese Pigmente werden in pulverförmigem Zustand der Betonmischung zugegeben. Aufgrund der guten Dispergierbarkeit erfolgt die vollständige homogene Verteilung des Pigmentpulvers in der Betonmischung in wenigen Minuten.

Der Nachteil des Einsatzes von pulverförmigen Pigmenten besteht darin, daß sie kein gutes Fließverhalten aufweisen und sich beim Lagern häufig zusammenballen und verklumpen und daß aufgrund der Feinteiligkeit der verwendeten Pigmentpulver mit einer mehr oder wenigerstarken Verschmutzung von Anlage, Werk und Umwelt gerechnet werden muß.

Zur Vermeidung dieser Nachteile ist es bekannt, Pigmentgranulate als Färbemittel einzusetzen. So wird in der DE 36 19 363 **(= EP 0 365 046)** ein Verfahren beschrieben, bei dem Pigmentgranulate durch Sprühtrocknung eines Gemisches aus Wasser, Pigment und Bindemittel hergestellt wird. Als Pigment werden Manganoxide, Eisenoxide, organische Pigmente und/oder Kohlenstoff sowie auch Mischungen aus den einzelnen Pigmenten eingesetzt. Als Bindemittel, die im Beton als Dispergierhilfsmittel wirken, werden genannt: Alkylbenzolsulfonat, Alkylnaphthalinsulfonat, Ligninsulfonat, sulfatierte Polyglykolether, Melaminformaldehydkondensate, Naphthalinformaldehydkondensate, Glukonsäure, Salze von niedrigmolekularen teilveresterten Styrol-Maleinsäureanhydrid-Copolymerisaten und Copolymeren aus Vinylacetat und Krotonsäure. Der Anteil im Pigment beträgt dabei zwei bis sechs Gewichtsprozent.

Ein Hauptnachteil der Sprühgranuliertrocknung besteht darin, daß ein verfahrenstechnisch bedingter Hohlraum in den Zentren der Granalie gebildet wird. Die Festigkeit der Granalie wird dadurch geringer, so daß die Granalien beim Transport und bei der Lagerung zerstört werden können und der Anteil an Teilchen kleiner 0,1 mm so groß werden kann, daß das Fließverhalten des Materials beeinträchtigt werden kann.

Aus der DE 41 03 531 ist es bekannt, daß zur Reduzierung des Anteils an Teilchen kleiner 0,1 mm die spühgetrockneten Granalien vorzugsweise 15 Minuten bis 2 Stunden bei einer Temperatur bis zu 300°C in Trommeln, Schnecken oder Drehtellern nachgranuliert werden.

Der hohe Aufwand zur Nachgranulation verteuert wesentlich die Herstellungskosten der Pigmentgranulate.

Aus der EP 0 518 152 A3 und der DE 42 23 598 A1 sind bereits Verfahren zum Einfärben von Baustoffen mit organischen Pigmenten in Form von Granulaten bekannt, bei denen die Pigmentgranulate aus einer Suspension eines oder mehrerer Pigmente mit einem löslichen Salz hergestellt werden und sich durch ein besseres Dispergierverhalten auszeichnen sollen. Dabei erfolgt die Granulation der Suspension mittels einer Sprühtrocknung oder durch eine Aufbaugranulation mittels eines Granuliertellers. Da bei diesen vorbekannten Verfahren der Suspension aus Farbpigmenten zusätzlich Phosphatsalze zugegeben werden, welche die Dispergiereigenschaften der Granalien in den Baustoff verbessern sollen, werden die Kosten zur Herstellung dieser Granalien nicht unwesentlich erhöht. Gleichzeitig werden die Eigenschaften der Baustoffe durch die Phosphatsalze negativ beeinflußt. So kann durch diese Phosphatsalze die Aushärtung der Baustoffe verzögert werden, und die Salze können im fertigen Beton Langzeitschäden hervorrufen.

Aus der GB 2 040 954 A sowie der US-A 3 579 366 kennt man bereits verschiedene Verfahren zur Herstellung spezieller Beton-Zusatzstoffe, wobei diese Verfahren eine Mischung der Zusatzstoffe und eine anschließende Trocknung beinhalten. Auch mit den in diesen vorbekannten Verfahren hergestellten Zusatzstoffen kann jedoch nicht beispielsweise die Verdichtungswilligkeit des Betons, dessen Farbgestaltung, die Luftporenbildung und gleichzeitig dessen Festigkeit ohne Beeinträchtigung anderer Parameter erhöht werden.

Es besteht daher insbesondere die Aufgabe, ein kostengünstiges Verfahren zur Herstellung eines Zusatzstoffes zu schaffen, der sich durch eine gute Produktbeständigkeit auszeichnet, im Baustoff-Mischprozeß leicht anzuwenden ist und die Eigenschaften dieses Baustoffes in der angestrebten Weise verändert, ohne andere Parameter dieses Baustoffes wesentlich zu beeinträchtigen.

Die erfindungsgemäße Lösung dieser Aufgabe besteht bei dem Verfahren der eingangs erwähnten Art insbesondere darin, daß der Zusatzstoff oder die Zusatzstoffe in einer Flüssigkeit zu einer Ausgangssuspension aufgeschlämmt oder aufgemischt werden und daß diese Ausgangssuspension in einem nachfolgenden Wirbelschicht-Granulationstrocknungsverfahren auf Keime aus arteigenem Ausgangsmaterial aufgesprüht und zu einem in den Baustoff einmischbaren Zwischenprodukt granuliert wird.

Bei dem erfindungsgemäßen Verfahren werden zunächst die Zusatzstoffe in einer Flüssigkeit zu einer Ausgangssuspension aufgeschlämmt. Dabei können auch mehrere Zusatzstoffe in der Ausgangssuspension miteinander kombiniert werden, um diese Zusatzstoffe und die damit verbundenen unterschiedlichen Eigenschaften im Beton miteinander zu variieren. Es ist unschädlich, wenn diese Ausgangssuspension nur über einen kurzen Zeitraum stabil bleibt, da sie in einem nachfolgenden Wirbelschichtgranulationstrockungsverfahren zu einem in den Baustoff einmischbaren Zwischenprodukt granuliert wird. Dieses Zwischenprodukt ist in seiner granulierten Form bei sachgemäßer Lagerung praktisch unbegrenzt stabil. Es löst sich bei der Anwendung vollständig im Betonmischprozeß auf und verändert beispielsweise nicht das Fließverhalten dieses Baustoffes in unerwünschter Weise.

Dabei sieht eine Weiterbildung gemäß der Erfindung vor, daß eine Ausgangssuspension des Zusatzstoffes mit 20% bis 60 % Feststoffgehalt und im Falle der anorganischen Farb-Pigmente bezogen auf den Feststoffgehalt mit 2% bis 6 % Bindemittel auf arteigene Keime, die sich im Bett einer Wirbelschicht-Granulationstrockungsanlage mit klassierendem Materialaustrag befinden, aufgesprüht wird, bei Zulufttemperaturen des Wärmeträgers von 150 bis 250°C zu Granalien von 0,1 bis 1,25 mm Durchmesser mit einer Feuchte von 0,5 bis 5 % granuliert und kontinuierlich durch einen klassierenden Austrag ausgetragen werden. Dabei können als Bindemittel für die Granulierung anorganischer Farb-Pigmente als Betonverflüssiger geeignete Produkte in reiner Form oder in ihren Mischungen verwendet werden.

Diese Ausgangsslurry wird mittels einer Zweistoffdüse auf die arteigenen Keime, die sich auf dem Bett einer Wirbelschicht-Granulationstrocknungsanlage mit klassierendem Materialaustrag befinden, aufgesprüht. Bei Zulufttemperaturen des Wärmeträgers von 150 bis 250°C erfolgt die Ganalienbildung in der Wirbelschicht.

Die Wirbelschicht wird so betrieben, daß Granalien mit einem Durchmesser von 0,1 bis 1,25 mm und einer Restfeuchte von 0,5 bis 5 % kontinuierlich über einen klassierenden Austrag die Wirbelschicht verlassen.

Die Ablufttemperatur der zugeführten Zuluft zur Aufrechterhaltung der Wirbelschicht und zur Granuliertrocknung beträgt 30 bis 40°C.

Die Vorteile des erfindungsgemäßen Verfahrens zur Herstellung von Zusatzstoffen für zement- und kalkgebundene Baustoffe, wie zum Beispiel Betonverflüssiger, Farbverstärker, Luftporenbildner, Farbstoffe auf Basis anorganischer Pigmente, festigkeitserhöhende Komponenten und ähnliches bestehen darin, daß durch die Wirbelschichtgranuliertrocknung ein feinkörniges Endprodukt erzeugt wird, das staubfrei ist und sich durch ein gutes pneumatisches Förderverhalten auszeichnet. Die granulierten Farb- und dergleichen Zusatzstoffe lassen sich exakt dosiert der Betonmischung zugeben. Außerdem werden die Granulate in der Betonmischung schnell aufgelöst. Messungen ergaben, daß eine Auflösung der Granulate und eine homogene Verteilung des Zusatzstoffes in der Betonmischung in einer Zeit kleiner 100 Sekunden erfolgt. Stippen und Farbnester im Beton treten nicht auf.

Ein weiterer Vorteil des erfindungsgemäßen Verfahrens besteht darin, daß keine Hohlgranulate, wie sie bei der Sprühtrocknung entstehen, erzeugt werden. Durch die Festigkeit und die hohe Schüttdichte der erzeugten Granulate wird bei sachgemäßem Transport, Lagerung und Handhabung ein Abrieb oder ein Zerstören der Granulate und somit eine Staubbildung vermieden.

Zur Herstellung eines granulierten Farbstoffes zum Einfärben von Baustoffen wird als Ausgangsmaterial vorzugsweise anorganische Farbpigmente auf Basis von Metalloxiden und Kohlenstoff, vorzugsweise Eisenoxide eingesetzt, die mit Wasser und Bindemittel zu einer Suspension verarbeitet werden. Die Ausgangssuspension des Farbstoffes besteht dabei aus 40 bis 60 % Feststoffgehalt und, bezogen auf den Feststoffgehalt, aus 2 bis 6 % Bindemittel.

Anhand eines Ausführungsbeispiels wird das erfindungsgemäße Verfahren näher erläutert.

Zur Herstellung von granulierten Farbstoffen zum Einfärben von Baustoffen wird aus 50 % Trockengehalt von Eisenoxid rot (Bayferrox 130), 3 % Ligninsulfonat und 1 % Optapix AC 95 unter Zugabe von Wasser eine Ausgangsslurry des Farbstoffes hergestellt, wobei die Angaben des Bindemittelzusatzes auf den Feststoffgehalt bezogen sind.

Diese Ausgangssuspension wird auf arteigene Keime aufgesprüht, die sich auf dem Bett einer Wirbelschicht-Granuliertrocknungsanlage mit klassierendem Materialaustrag befinden. Bei Zulufttemperaturen des Wärmeträgers von 160°C erfolgt die Aufbaugranulation und die Trocknung des Materials in der Wirbelschicht. Die Ablufttemperatur beträgt 35°C.

Die fertigen Granulate werden kontinuierlich über einen klassierenden Austrag aus der Wirbelschichtgranuliertrocknungsanlage ausgetragen. Die Feuchte der erzeugten Granulate beträgt 1% und das Kornband liegt zwischen 0,1 bis 1,0 mm. Die Granulate sind staubfrei und weisen eine hohe Schüttdichte auf. Bei Zugabe in einen Betonmischer erfolgte innerhalb von 100 Sekunden eine vollständige Auflösung der Granalien und eine homogene Verteilung des Farbstoffes in der Betonmischung.

## Patentansprüche

1. Verfahren zur Herstellung von granulierten Zusatzstoffen für zement- und kalkgebundene Baustoffe, wie zum Beispiel Betonverflüssiger, Farbverstärker, Luftporenbildner, Farbstoffe auf Basis anorganischer Pigmente, festigkeitserhöhende Komponenten oder dergleichen, welche zum Einmischen in trockene, flüssige oder pastöse Baustoffe vorgesehen sind, **dadurch gekennzeichnet,** daß der Zusatzstoff oder die Zusatzstoffe in einer Flüssigkeit zu einer Ausgangssuspension aufgeschlämmt oder aufgemischt werden und daß diese Ausgangssuspension in einem nachfolgenden Wirbelschicht-Granulationstrocknungsverfahren **auf Keime aus arteigenem Ausgangsmaterial aufgesprüht und** zu einem in den Baustoff einmischbaren Zwischenprodukt granuliert wird.

2. Verfahren, insbesondere nach Anspruch 1, dadurch gekennzeichnet, daß eine Ausgangssuspension des Zusatzstoffes mit 20% bis 60% Feststoffgehalt und im Falle der anorganischen Farbpigmente bezogen auf den Feststoffgehalt mit 2% bis 6% Bindemittel auf arteigene Keime, die sich im Bett einer Wirbelschicht-Granulationstrocknungsanlage mit klassierendem Materialaustrag befinden, aufgesprüht wird, bei Zulufttemperaturen des Wärmeträgers von 150 bis 250°C zu Granalien von 0,1 bis 1,25 mm Durchmesser mit einer Feuchte von 0,5 bis 5 % granuliert und kontinuierlich durch einen klassierenden Austrag ausgetragen werden.

3. Verfahren nach Anspruch 1 oder 2, dadurch gekennzeichnet, daß als Bindemittel für die Granulierung anorganischer Farb-Pigmente als Betonverflüssiger geeignete Produkte in reiner Form oder in ihren Mischungen verwendet werden.

4. Verfahren nach einem der Ansprüche 1 bis 3, dadurch gekennzeichnet, daß die Ablufttemperatur der Wirbelschichtgranulationstrocknung 30 bis 40°C beträgt.

5. Verfahren nach einem der Ansprüche 1 bis 4, dadurch gekennzeichnet, daß der Zusatzstoff bzw. Zuschlagstoff ein anorganisches Farbpigment auf Basis von Metalloxiden und/oder Kohlenstoff ist.

## Claims

1. Process for producing granulated admixtures for cement- and lime-bound building materials, such as for example plastifying admixtures for concrete, colour intensifiers, air-entraining admixtures, dyes based on inorganic pigments, reinforcing components or the like, which are intended for mixing into dry, liquid or paste-type building materials, characterised in that the admixture or admixtures is or are suspended or mixed in a liquid to form a starting suspension and in a subsequent fluidised bed granulation drying process this starting suspension is sprayed onto nuclei of characteristic starting material and granulated to form an intermediate product which can be mixed into the building material.

2. Process, particularly according to claim 1, characterised in that a starting suspension of the additive with a solids content of 20% to 60% and, in the case of the inorganic dye pigments, containing 2% to 6% binder, based on the solids content, is sprayed onto characteristic nuclei located in the bed of a fluidised bed granulation drying plant with a grading outlet for materials, granulated at air inlet temperatures of the heat carrier of 150 to 250°C to form granules measuring 0.1 to 1.25 mm in diameter with a moisture content of 0.5 to 5% and continuously discharged through a grading outlet.

3. Process according to claim 1 or 2, characterised in that products which are suitable as plastifying admixtures are used, in pure form or in the form of their mixtures, as binders for the granulation of inorganic dye pigments.

4. Process according to one of claims 1 to 3, characterised in that the temperature of the exhaust air from the fluidised bed granulation drying process is 30 to 40°C.

5. Process according to one of claims 1 to 4, characterised in that the admixture or additive is an inorganic dye pigment based on metal oxides and/or carbon.

## Revendications

1. Procédé pour la fabrication d'additifs agglomérés pour matériaux de construction liés au ciment et à la chaux, comme par exemple des additifs fluidifiants, des renforçateurs de teinte, des agents porogènes, des colorants à base de pigments inorganiques, des composants améliorant la dureté ou équivalents, lesquels sont prévus pour être intégrés en mélange dans des matériaux de construction secs, liquides ou pâteux, **caractérisé en ce que** l'additif ou les additifs sont mis en suspension ou mélangés dans un liquide pour former une suspension de départ et en ce que cette suspension de départ est pulvérisée, lors d'un procédé ultérieur de granulation-séchage en lit fluidisé, sur des germes d'un matériau de départ propres à l'espèce, et granulée en un produit intermédiaire pouvant être intégré dans le matériau de construction.

2. Procédé, particulièrement selon la revendication 1, caractérisé en ce qu'une suspension de départ de l'additif présentant une teneur en solide comprise entre 20 et 60 % et, dans le cas de pigments colorés inorganiques, sur la base de la teneur en solide, 2 % à 6 % de liant, est pulvérisée sur des germes propres à l'espèce, qui se trouvent dans le lit d'un dispositif de granulation-séchage en lit fluidisé avec décharge du matériau avec triage, est granulée à des températures d'air d'amenée du caloporteur comprises entre 150 et 250 °C pour donner des granulés présentant un diamètre compris entre 0,1 et 1,25 mm et une humidité comprise entre 0,5 et 5 %, lesquels granulés sont évacués en continu par un dispositif de décharge avec triage.

3. Procédé selon la revendication 1 ou 2, caractérisé en ce que l'on utilise comme liant pour la granulation des pigments colorés inorganiques en tant que produits appropriés comme additifs fluidifiants, sous leur forme pure ou en mélanges.

4. Procédé selon l'une des revendications 1 à 3, caractérisé en ce que la température de sortie de la granulation-séchage en lit fluidisé est comprise entre 30 et 40 °C.

5. Procédé selon l'une des revendications 1 à 4, caractérisé en ce que l'additif ou la matière ajoutée est un pigment coloré inorganique à base d'oxydes de métal et/ou à base de carbone.
